# EUROPEAN PATENT APPLICATION

(11) **EP 3 575 624 A1**
(43) Date of publication of application: **04.12.2019**
(21) Application number: 18744553.1
(22) Date of filing: 25.01.2018
(51) Int. Cl.: F16D 55/228, F16D 65/092, F16D 65/097

(54) **DISC BRAKE PAD AND DISC BRAKE DEVICE**

(30) Priority: 30.01.2017 JP 2017014005
(71) Applicant: Akebono Brake Industry Co., Ltd., Tokyo 103-8534 (JP)
(72) Inventor: SASAKI, Takaaki, Tokyo 103-8534 (JP); EGAWA, Hiroki, Tokyo 103-8534 (JP); SATO, Masaki, Tokyo 103-8534 (JP)
(74) Representative: Grünecker Patent- und Rechtsanwälte PartG mbB
(86) International application number: PCT/JP2018/002331
(87) International publication number: WO 2018/139549

(57) **Abstract**

In a middle section in the circumferential direction of a back plate (29) that forms pads (3, 4), a first torque transmission part (33), which is for transmitting to a caliper (2) a brake tangential force (F1) acting toward one side in the circumferential direction during forward-movement braking, is provided at a portion protruding farther outside in the radial direction than the outer circumferential edge of a lining (28). Furthermore, in a section on the other side in the circumferential direction of the back plate (29), a second torque transmission part (31), which is for transmitting to the caliper (2) a brake tangential force (F2) acting toward the other side in the circumferential direction during backward-movement braking, is provided at a portion located farther inside in the radial direction than the line of action of the brake tangential force acting during braking.

## Description

### TECHNICAL FIELD

The present invention relates to a disc brake pad and a disc brake device.

### BACKGROUND ART

A disc brake device is widely used to brake an automobile. At a time of braking by the disk brake device, a pair of pads, which are disposed on both axial sides of the rotor that rotates together with a wheel, are pressed against both side surfaces of the rotor by pistons. Various types of structures have been conventionally known as such a disc brake device. However, an opposed-piston disc brake device including the pistons opposite to each other on both axial sides of the rotor has been increasingly used in recent years since a stable braking force can be attained.

The opposed-piston disc brake device includes a caliper that supports the pair of pads disposed on both axial sides of the rotor so as to be movable in the axial direction. The caliper includes an inner body and an outer body in a state of sandwiching the rotor. The inner body and the outer body include an inner cylinder and an outer cylinder which are opened in surfaces facing each other. Further, an inner piston and an outer piston are fitted in the inner cylinder and the outer cylinder so as to be displaceable in the axial direction. The inner pad and the outer pad are supported by the inner body and the outer body so as to be movable in the axial direction. At a time of braking, pressure oil is fed into the inner cylinder and the outer cylinder, whereby the inner piston and the outer piston are respectively pushed out, and the inner pad and the outer pad are pressed against axial side surfaces of the rotor.

In the present specification and claims, an "axial direction", a "circumferential direction", and a "radial direction" refer to an "axial direction of a rotor", a "circumferential direction of the rotor", and a "radial direction of the rotor" unless otherwise specified. "Inward in the axial direction" refers to a "side which is a center side of a vehicle in a width direction of the vehicle" in an assembled state to the vehicle, and "outward in the axial direction" refers to a "side which is an outer side of the vehicle in the width direction of the vehicle". In addition, unless otherwise specified, a "rotation-in side" refers to a "side in which the rotor that rotates together with a wheel in a forward state enters between an inner body and an outer body", and a "rotation-out side" refers to "a side in which this rotor comes out between the inner body and the outer body".

### CITATION LIST

### PATENT LITERATURE

Patent Document 1: JP-T-2007-528468
Patent Document 2: JP-A-2008-111551
Patent Document 3: JP-A-2013-204742

### SUMMARY OF INVENTION

### TECHNICAL PROBLEM

In the opposed-piston disc brake device as described above, as described in Patent Documents 1 to 3, various structures such as a surface receiving structure, a pin receiving structure, and a pull anchor structure have been proposed as a structure (torque receiving structure) that supports the force acting on the inner pad and the outer pad. However, in any of the structures, when partial contact of a lining of the pad with the rotor occurs due to uneven wear of the pad or low hydraulic pressure of a brake fluid, a rotation direction of the pad may be not unique, and a posture of the pad may be unstable. As a result, an abnormal noise called a brake squeal may be generated. However, it is difficult to avoid the partial contact of the lining due to the uneven wear of the pad or the low hydraulic pressure of the brake fluid, so that it is necessary to stabilize the posture of the pad even when the partial contact of the lining occurs.

In view of the above circumstances, the present invention is invented to realize a structure of a disc brake pad and a disc brake device, which can stabilize a posture of a pad even when partial contact of a lining with a rotor occurs.

### SOLUTION TO PROBLEM

The above problem according to the present invention is solved by a disc brake pad having the following configuration.
(1) Similar to the disc brake pad of the conventional structure described above, a disc brake pad is supported in a caliper so as to be movable in an axial direction in a state where a disc brake device is assembled, and includes a lining (a friction material) and a metal back plate (a pressure plate) supporting a back surface of the lining.
   In particular, in the disc brake pad of the present configuration, a first torque transmitting portion, which is configured to transmit a brake tangential force that acts toward one circumferential side to the caliper at a time of braking, is provided at a part of the back plate projecting radially outward from an outer peripheral edge of the lining.
   A second torque transmitting portion, which is configured to transmit a brake tangential force that acts toward the other circumferential side to the caliper at the time of braking, is provided at a part of the other circumferential end portion of the back plate that is located radially inward from an action line (a center of a friction surface of the lining) of the brake tangential force acting at the time of braking.
   With the configuration as described in (1), while the brake tangential force that acts toward the one circumferential side at the time of braking is supported by an abutting portion of the first torque transmitting portion and the caliper (a first torque receiving surface), the brake tangential force that acts on the other circumferential side at the time of braking is supported by an abutting portion of the second torque transmitting portion and the caliper (a second torque receiving surface). Accordingly, at the time of forward braking and reverse braking, a moment acts on the pad in a direction in which the one circumferential side of the back plate is pushed up radially outward and the other circumferential side of the back plate is pushed down radially inward.
(2) The disc brake pad according to (1), in which one circumferential side surface (first torque transmitting surface) of the first torque transmitting portion is provided at a circumferential intermediate portion (in a vicinity of a center portion) of the back plate.
(3) The disc brake pad according to any one of (1) and (2), in which a guided portion, which is engaged with a caliper movably in an axial direction and supports a moment acting at the time of braking, is provided at one circumferential end portion of the back plate.
(4) The disc brake pad according to (3), in which the guided portion is a convex ear portion projecting from a side edge portion on one circumferential end side of the back plate to the one circumferential side.
(5) The disc brake pad according to any one of (1) to (4), in which at least one of one circumferential side surface of the first torque transmitting portion and the other circumferential side surface of the second torque transmitting portion is a convex curved surface projecting in the circumferential direction.
(6) The disc brake pad according to any one of (1) to (5), in which a projecting portion for pad spring engagement projecting radially outward is provided at a part of an outer peripheral edge portion of the back plate on one circumferential side with respect to the first torque transmitting portion.
(7) The disc brake pad according to any one of (1) to (6), in which a concave portion for mounting a wear indicator, which is recessed radially inward, is formed at a part of the outer peripheral edge portion of the back plate on the other circumferential side with respect to the first torque transmitting portion.
   The above problem according to the present invention is solved by a disc brake device having the following configuration.
(8) A disc brake device includes a caliper including a pair of bodies disposed on both axial sides of a rotor that rotates with a wheel, and a pair of pads which are respectively supported to the bodies so as to be movable in an axial direction.
   In particular, in the disc brake device of the present configuration, each of the pads is the disc brake pad according to any one of (1) to (7).
   A torque receiving portion, which abuts against the one circumferential side surface of the first torque transmitting portion and is configured to support a brake tangential force that acts toward one circumferential side on each of the pads at a time of braking, is provided in a state of connecting the pair of bodies in the axial direction.
(9) The disc brake device according to (8), in which the torque receiving portion is formed of a member separate from the caliper.
   Alternatively, in the disc brake device of the present configuration, the torque receiving portion is provided integrally with the caliper.
(10) The disc brake device according to any one of (8) and (9) further includes a first pad spring which is configured to apply an elastic force directed radially outward to a part of the pad on the one circumferential side.
(11) The disc brake device according to any one of (8) to (10) further includes a second pad spring which is configured to apply an elastic force directed radially inward to a part of the pad on the other circumferential side.

### ADVANTAGEOUS EFFECTS OF INVENTION

According to the disc brake pad and the disc brake device according to the present invention having the configuration as described above, the posture of the pad can be stabilized even when the partial contact of the lining occurs.

### BRIEF DESCRIPTION OF DRAWINGS

[Fig. 1] Fig. 1 is a front view of an opposed-piston disc brake device illustrating a first embodiment of the present invention.
[Fig. 2] Fig. 2 is a right side view of the opposed-piston disc brake device illustrated in Fig. 1.
[Fig. 3] Fig. 3 is a top view of the opposed-piston disc brake device illustrated in Fig. 1.
[Fig. 4] Fig. 4 is a cross-sectional view taken along line A-A of the opposed-piston disc brake device illustrated in Fig. 3.
[Fig. 5] Fig. 5 is a perspective view of the opposed-piston disc brake device illustrated in Fig. 1 as viewed from a radial outer side and an axial outer side.
[Fig. 6] Fig. 6 is a view illustrating a state where a pad is omitted from the opposed-piston disc brake device illustrated in Fig. 3.
[Fig. 7] Fig. 7 is a view illustrating a state where the pad is omitted from the opposed-piston disc brake device illustrated in Fig. 4.
[Fig. 8] Fig. 8 is a view illustrating a state where the pad is omitted from the opposed-piston disc brake device illustrated in Fig. 5.
[Fig. 9] Fig. 9 is front views illustrating an inner pad taken out according to the first embodiment of the present invention. (A) of Fig. 9 illustrates a forward braking state, and (B) of Fig. 9 illustrates a reverse braking state.
[Fig. 10] Fig. 10 is a right side view illustrating the inner pad taken out according to the first embodiment of the present invention.
[Fig. 11] Fig. 11 is a top view illustrating the inner pad taken out according to the first embodiment of the present invention.
[Fig. 12] Fig. 12 is a perspective view illustrating the inner pad taken out according to the first embodiment of the present invention.
[Fig. 13] Fig. 13 is a front view illustrating an inner pad taken out according to the second embodiment of the present invention.
[Fig. 14] Fig. 14 is a front view illustrating an inner pad taken out according to the third embodiment of the present invention.

### DESCRIPTION OF EMBODIMENTS

### [First Embodiment]

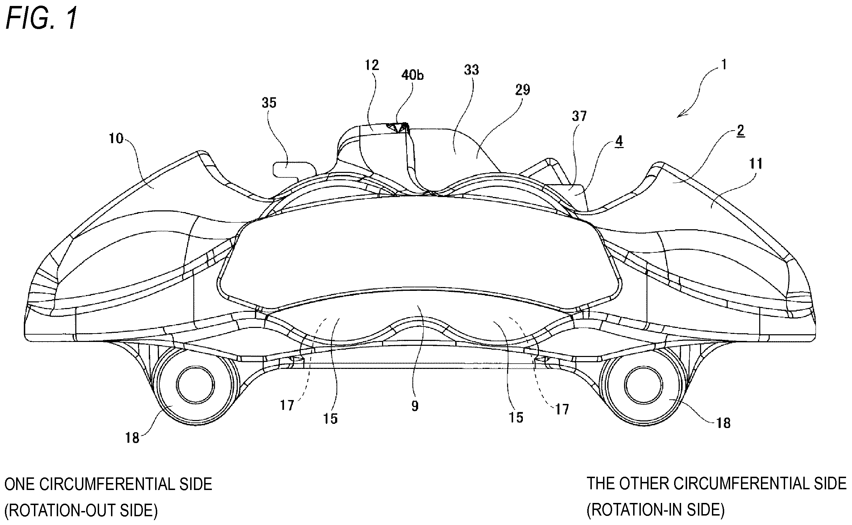

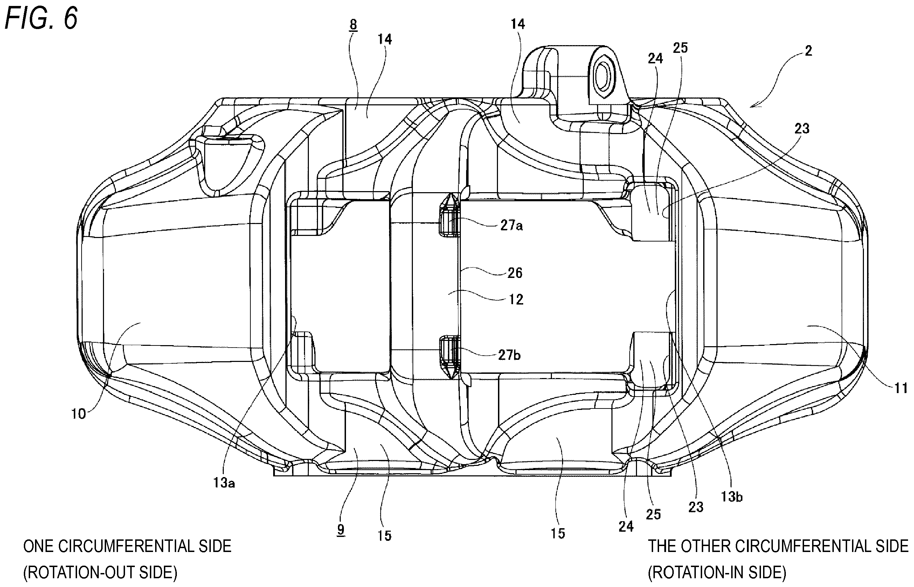

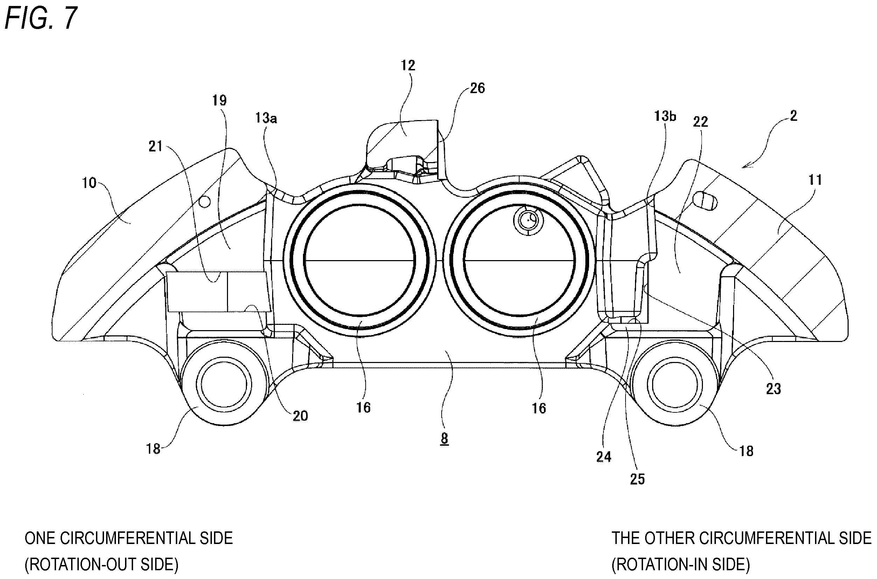

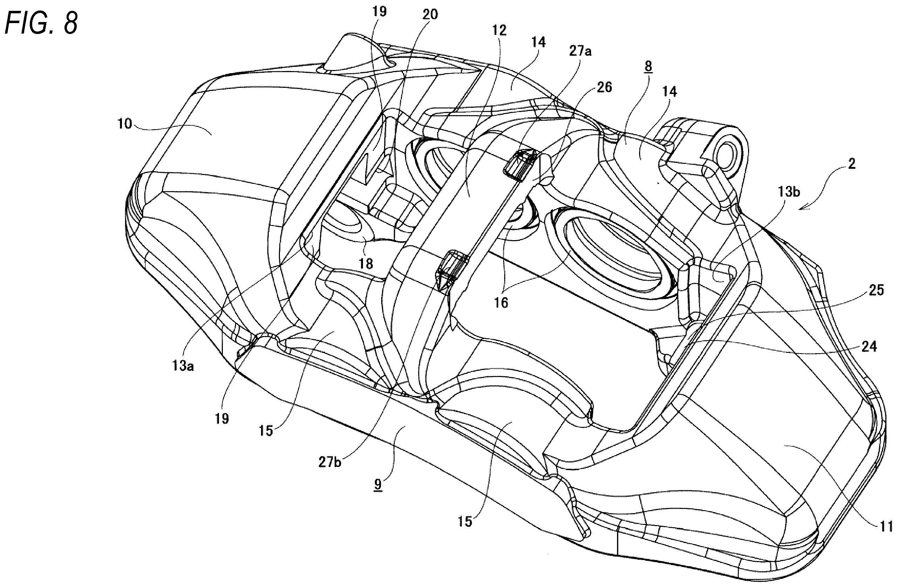

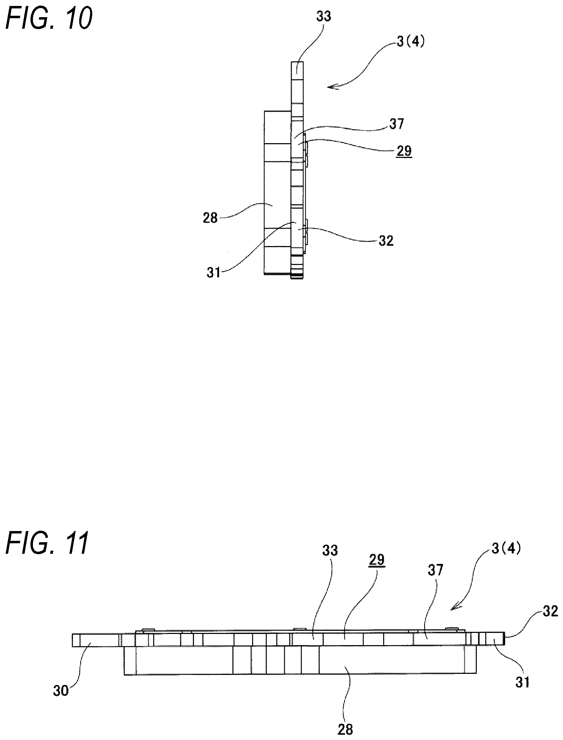

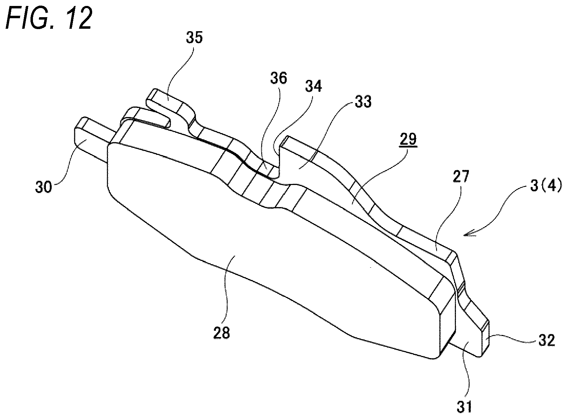

A first embodiment of the present invention is described with reference to Figs. 1 to 12. An opposed-piston disc brake device (a disc brake device) 1 according to the first embodiment roughly includes a caliper 2, a pair of disc brake pads 3, 4 (an inner pad 3, an outer pad 4), and a pair of pad springs 5 and 6 (a first pad spring 5 and a second pad spring 6).

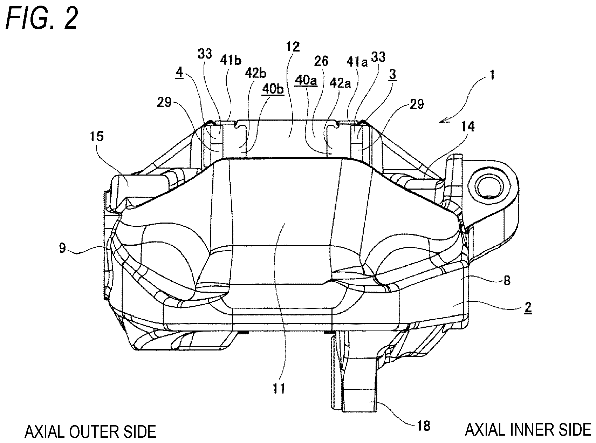

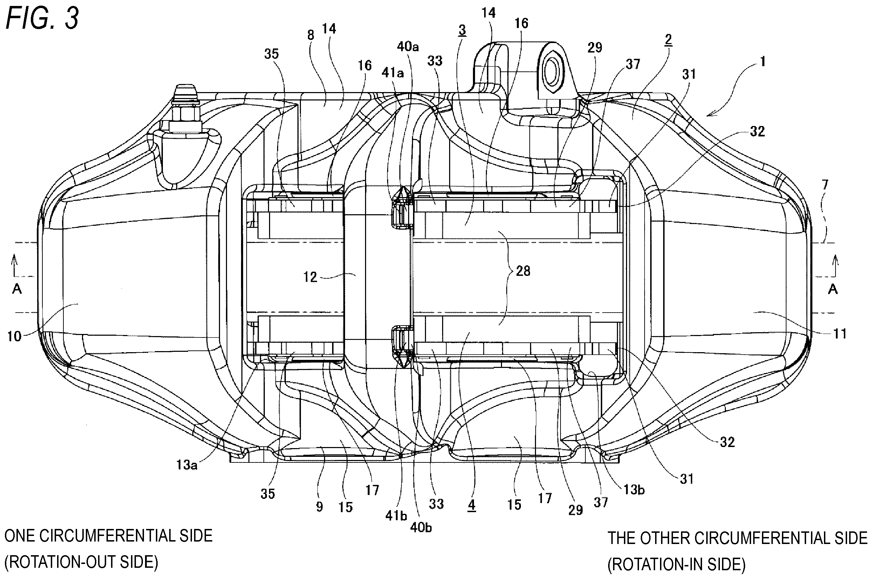

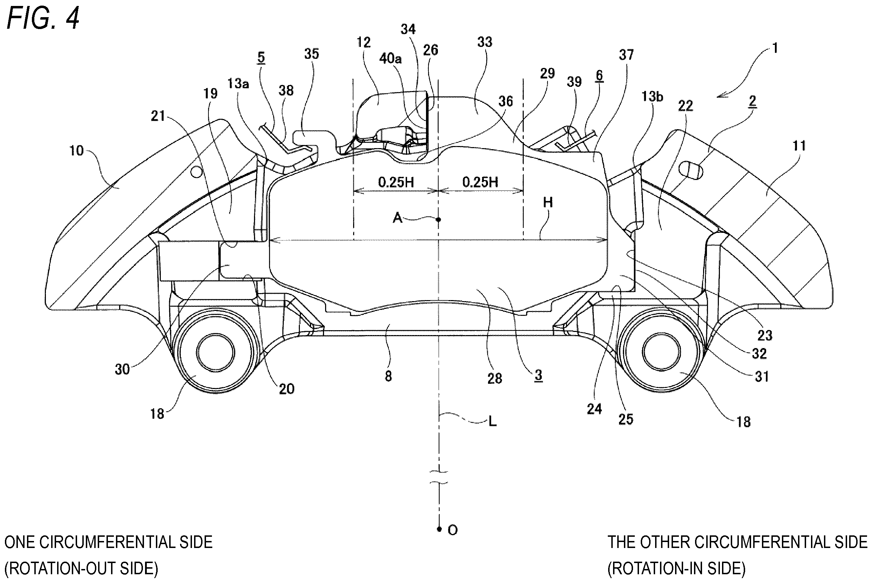

The caliper 2 supports the inner pad 3 and the outer pad 4 so as to be movable in an axial direction (a front-back directions in Figs. 1 and 4, a left-right direction in Fig. 2, and an upper-lower direction in Fig. 3), and is integrally formed by casting or the like of a light alloy which is an aluminum alloy or the like or an iron-based alloy. The caliper 2 includes an inner body 8 and an outer body 9 provided in a state of sandwiching a disc-shaped rotor 7 (see Fig. 3) that rotates together with a wheel, a pair of connection portions 10, 11 that connect both circumferential end portions of each of the inner body 8 and the outer body 9, and a center bridge 12 that connects circumferential intermediate portions of the inner body 8 and the outer body 9.

In addition, a portion between the connection portion 10 and the center bridge 12 provided on one circumferential side (left side in Figs. 1, 3, and 4) of the caliper 2 and a portion between the connection portion 11 and the center bridge 12 provided on the other circumferential side of the caliper 2 (right side in Figs. 1, 3 and 4) are window portions 13a, 13b having a substantially rectangular shape in a plan view. Further, two inner cylinders 14, 14 and two outer cylinders 15, 15 are provided in the inner body 8 and the outer body 9, respectively. Further, inner pistons 16, 16 and outer pistons 17, 17 are respectively fitted in the inner cylinders 14, 14 and the outer cylinder 15, 15 so as to be oil-tight and displaceable in the axial direction. The caliper 2 is supported and fixed to a vehicle body side (a knuckle of a suspension device) by a pair of mounting seats 18, 18 provided on the inner body 8.

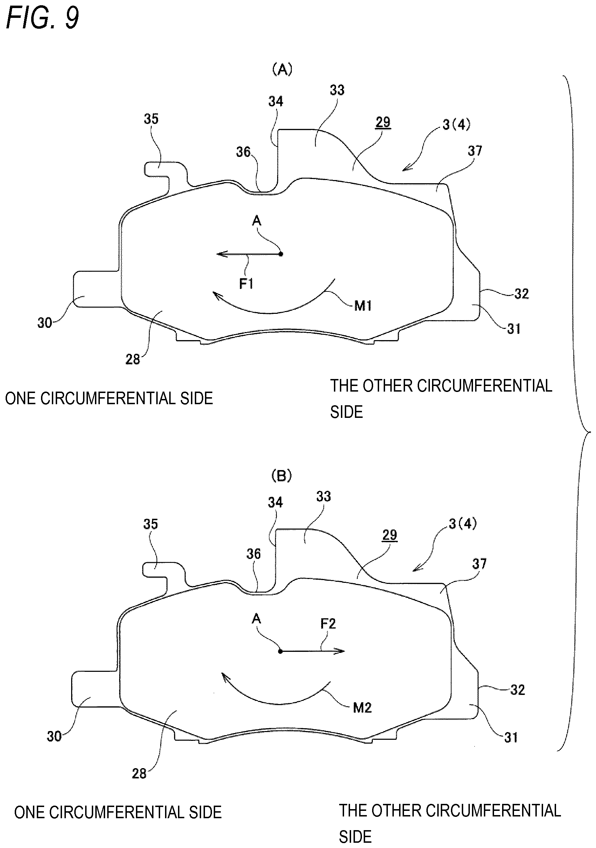

At a time of braking, pressure oil is fed into the inner cylinder 14 and the outer cylinder 15, whereby the inner piston 16 and the outer piston 17 are respectively pushed out, and the inner pad 3 and the outer pad 4 are pressed against axial side surfaces of the rotor 7. Further, at a time of forward braking, as illustrated in (A) of Fig. 9, a brake tangential force F1 directed to one circumferential side (left side which is a rotation-out side in Fig. 9) acts on a point A which is a friction surface center (a pad effective diameter determined by a diameter or an arrangement of the piston, or the like) of the lining 28 described later. On the other hand, at a time of reverse braking, as illustrated in (B) of Fig. 9, a brake tangential force F2 directed to the other circumferential side (right side which is a rotation-in side in Fig. 9) acts on the point A which is the friction surface center.

A rotation-out side guide wall portion 19 projecting in the axial direction is provided on the axial side surfaces (an axial outer side surface of the inner body 8 and an axial inner side surface of the outer body 9) of the inner body 8 and the outer body 9 opposite to each other near one circumferential end of each of the inner body 8 and the outer body 9. The other circumferential side surface of the rotation-out side guide wall portion 19 is formed in a flat surface shape substantially parallel to a virtual plane including a virtual line L passing through a rotation center O of the rotor 7 and the point A which is the friction surface center and a central axis of the rotor 7. A guide recessed groove 20, which extends in the circumferential direction and is opened at the axial side surface and the other circumferential side surface respectively, is provided in a radial intermediate portion of the rotation-out side guide wall portion 19. The guide recessed groove 20 is a portion to which later-described ear portions 30 provided on the inner pad 3 and the outer pad 4 are engaged so as to be movable in the axial direction. A radial outer surface of the guide recessed groove 20 is provided with a flat surface-shaped rotation-out side moment supporting surface 21 that is configured to support a moment force (rotational couple) acting on the inner pad 3 and the outer pad 4 at a time of forward braking and reverse braking.

On the other hand, a rotation-in side guide wall portion 22 projecting in the axial direction and having a substantially L shape in a front view is provided on the axial side surfaces (an axial outer side surface of the inner body 8 and an axial inner side surface of the outer body 9) of the inner body 8 and the outer body 9 opposite to each other near the other circumferential end of each of the inner body 8 and the outer body 9. A second torque receiving surface 23, which has a flat surface shape substantially parallel to the virtual plane and is configured to support a brake tangential force F2 acting on the inner pad 3 and the outer pad 4 at the time of reverse braking, is provided on one circumferential side surface of a radial intermediate portion of the rotation-in side guide wall portion 22. A rotation-in side projecting portion 24, which projects to one circumferential side with respect to the second torque receiving surface 23, is provided at a radial inner end portion of the rotation-in side guide wall portion 22. A radial outer surface of the rotation-in side projecting portion 24 is provided with a flat surface-shaped rotation-in side moment supporting surface 25 that is configured to support the moment force (a rotational couple) acting on the inner pad 3 and the outer pad 4 at the time of forward braking and reverse braking.

As described above, in the case of the opposed-piston disc brake device 1 according to the first embodiment, the rotation-out side guide wall portion 19 including the guide recessed groove 20 is provided on the one circumferential side of each of the inner body 8 and the outer body 9, while a rotation-in side guide wall portion 22 including the second torque receiving surface 23 having the flat surface shape is provided on the other circumferential side of each of the inner body 8 and the outer body 9. Therefore, in the first embodiment, a shape of the caliper 2 is asymmetric with respect to the circumferential direction.

The connection portions 10, 11 are provided radially outward of an outer peripheral edge of the rotor 7, which are configured to connect both circumferential end portions of the inner body 8 and both circumferential end portions of the outer body 9 to each other. Specifically, the connection portion 10 provided on the one circumferential side connects one circumferential end portion (a rotation-out side end portion) of the inner body 8 and one circumferential end portion of the outer body 9 in the axial direction to each other, and the connection portion 11 provided on the other circumferential side connects the other circumferential end portion (a rotation-in side end portion) of the inner body 8 and the other circumferential end portion of the outer body 9 in the axial direction to each other. The connection portions 10, 11 are formed in a partial arc shape along the outer peripheral edge of the rotor 7, and cover the rotor 7 radially outward with a predetermined gap.

The center bridge 12 corresponds to a torque receiving portion described in the claims, which is formed in a rod shape (a substantially rectangular columnar shape) extending in the axial direction and is provided integrally with the caliper 2. The center bridge 12 is disposed between the pair of connection portions 10, 11 in the circumferential direction and radially outward of the outer peripheral edge of the rotor 7, and connects the circumferential intermediate portions of the inner body 8 and the outer body 9 in the axial direction. A first torque receiving surface 26, which is configured to support the brake tangential force F1 acting on the inner pad 3 and the outer pad 4 at the time of forward braking and has a flat surface shape substantially parallel to the virtual plane, is provided on the other circumferential side surface of the center bridge 12. In addition, in the first embodiment, the center bridge 12 is provided at a position deviated to one circumferential side from a center position of the connection portions 10, 11 in the circumferential direction. Therefore, an opening width of the window portion 13a provided between the connection portion 10 and the center bridge 12 is smaller than an opening width of the window portion 13b provided between the connection portion 11 and the center bridge 12. A pair of radially and inwardly recessed engagement concave portions 27a, 27b are provided at the other circumferential end portion of the radial outer side surface of the center bridge 12 in a state of being separated in the axial direction.

The inner pad 3 and the outer pad 4 include linings (friction materials) 28, 28 and metal back plates (pressure plates) 29, 29 supporting back surfaces of the linings 28, 28, and are supported to the inner body 8 and the outer body 9 so as to be movable in the axial direction as described above. For this purpose, the shapes of both circumferential side portions of each of the inner pad 3 and the outer pad 4 (the back plates 29) are asymmetric. That is, while the ear portion 30, which is configured to engage with the guide recessed groove 20, is provided at one circumferential end portion (a rotation-out side end portion) of the back plate 29, a second torque transmitting portion 31, which is mounted on the rotation-in side projecting portion 24, is provided at the other circumferential end portion (a rotation-in side end portion) of the back plate 29 at which the ear portion is not provided. The inner pad 3 and the outer pad 4 are mirror symmetrical to each other with respect to the axial direction.

A convex (a rectangular plate shape) ear portion 30, which projects toward one circumferential side and corresponds to a guided portion described in the claims, is provided at a radial intermediate portion of a side edge portion of the back plate 29 on one circumferential end side. The ear portion 30 is engaged with the guide recessed groove 20 so as to be movable in the axial direction. Accordingly, the inner pad 3 and the outer pad 4 are supported to the caliper 2 so as to be movable in the axial direction. At the time of braking (forward braking and reverse braking), a radial outer side surface of the ear portion 30 abuts against the rotation-out side moment supporting surface 21 provided on the radial outer side surface of the guide recessed groove 20. Accordingly, a moment acting on the inner pad 3 and the outer pad 4 is supported by the caliper 2.

On the other hand, a substantially trapezoidal second torque transmitting portion 31 projecting toward the other circumferential side is provided near a radial inner end of a side edge portion on the other circumferential end side of the back plate 29. A second torque transmitting surface 32, which is configured to transmit the brake tangential force F2 acting on the inner pad 3 and the outer pad 4 at the time of reverse braking to the second torque receiving surface 23 (to cause the second torque receiving surface 23 to bear the brake tangential force F2), is provided on the other circumferential side surface of the second torque transmitting portion 31. The second torque transmitting surface 32 is located radially inward of an action line (the center A of the friction surface) of the brake tangential force F2, and is opposed to the second torque receiving surface 23 in the circumferential direction in an assembled state of the inner pad 3 and the outer pad 4 with respect to the caliper 2. In the first embodiment, the second torque transmitting surface 32 is formed in a flat surface shape. At the time of forward braking and reverse braking, a radial inner surface of the second torque transmitting portion 31 abuts against a rotation-in side moment supporting surface 25 provided on a radial outer side surface of the rotation-in side projecting portion 24. Accordingly, the moment acting on the inner pad 3 and the outer pad 4 is supported by the caliper 2.

Further, a first torque transmitting portion 33 having a boss shape, which projects radially outward from an outer peripheral edge of the lining 28, is provided at a radial outer end portion of a circumferential intermediate portion of the back plate 29. The first torque transmitting portion 33 is formed in a substantially trapezoidal shape in which a circumferential width dimension of a radial inner end portion (a base end portion) is larger than that of the radial outer end portion (a tip end portion). An amount of projection of the first torque transmitting portion 33 in the radial direction is such large that the radial outer side surface of the first torque transmitting portion 33 does not project radially outward from the radial outer side surface of the center bridge 12 in a state where the inner pad 3 and the outer pad 4 are assembled to the caliper 2. A first torque transmitting surface 34, which is configured to transmit the brake tangential force F1 acting on the inner pad 3 and the outer pad 4 at the time of forward braking to the first torque receiving surface 26 (to cause the first torque receiving surface 26 to bear the brake tangential force F1), is provided on the one circumferential side surface of the first torque transmitting portion 33. In the first embodiment, the first torque transmitting surface 34 is formed in a flat surface shape substantially parallel to the virtual plane. On the other hand, the other circumferential side surface of the first torque transmitting portion 33 is an inclined surface which is inclined in a direction toward the other circumferential side as extending radially inward.

The first torque transmitting surface 34 is provided at a circumferential intermediate portion of the back plate 29. Specifically, as illustrated in Fig. 4, when a circum ferential entire width of the lining 28 is H, the first torque transmitting surface 34 is positioned in a range of length 0.25H from the center A of the friction surface located at a center of the lining 28 in the width direction to each of the both circumferential sides. Accordingly, securing of a strength of the first torque transmitting portion 33 by securing the circumferential width dimension and securing of formation positions of a projecting portion 35 and a shoulder portion 37 described later, which are provided on both circumferential sides of the first torque transmitting portion 33, are compatible. In an illustrated example, the first torque transmitting surface 34 is positioned slightly on one circumferential side with respect to the virtual line L. A circumferential position of the center bridge 12 is regulated in accordance with a circumferential position of the first torque transmitting surface 34.

A substantially L-shaped (hook-shaped) projecting portion 35 is provided at a radial outer end portion near one circumferential end of the back plate 29 so as to project radially outward. The protrusion 35 is configured to lock a first pad spring 5 and is provided on one circumferential side with respect to the first torque transmitting portion 33 (the first torque transmitting surface 34). The projecting portion 35 projects radially outward from the outer peripheral edge of the back plate 29, and an radial outer end portion of the projecting portion 35 is bent at a substantially right angle toward one circumferential side. A clearance concave portion 36 recessed radially inward is provided between the projecting portion 35 and the first torque transmitting portion 33 of the outer peripheral edge of the back plate 29 in the circumferential direction. The clearance concave portion 36 is provided to prevent the outer peripheral edge of the back plate 29 from interfering with the center bridge 12 when the inner pad 3 and the outer pad 4 are assembled to the caliper 2.

On the other hand, a substantially triangular plate-shape shoulder portion 3 7, which projects radially outward from an outer peripheral edge of the lining 28, is provided at the other circumferential end of the outer peripheral edge of the back plate 29. The shoulder portion 37 is provided on the other circumferential side with respect to the first torque transmitting portion 33.

In order to support the inner pad 3 and the outer pad 4 having the configuration as described above so as to be movable in the axial direction with respect to the caliper 2, while the ear portion 30, which is provided at one circumferential end portion of the back plate 29, is loosely inserted into the guide recessed groove 20, the second torque transmitting portion 31, which is provided at the other circumferential end portion of the back plate 29, is placed on the rotation-in side projecting portion 24. In this state, while the first torque transmitting surface 34, which is provided at the radial outer end portion of the back plate 29, is opposed to the first torque receiving surface 26 in the circumferential direction, the second torque transmitting surface 32, which is provided on the other circumferential end surface of the back plate 29, is opposed to the second torque receiving surface 23 in the circumferential direction. Further, while the projecting portion 35 is inserted into the window portion 13a from the radial inner side, the first torque transmitting portion 33 and the shoulder portion 37 are inserted into the window portion 13b from the radial inner side.

Further, in the case of the first embodiment, as schematically illustrated in Fig. 4, a first pad spring 5 and a second pad spring 6, which are made of metal plates having elasticity and corrosion resistance, such as stainless steel plates, are assembled between the caliper 2 and the inner pad 3 and the outer pad 4. The first pad spring 5 includes a pair of first arm portions 38, and the first arm portion 38 is engaged with the radial outer end portion of the projecting portion 35 in a state where the first pad spring 5 is supported and fixed to the caliper 2. Accordingly, an elastic force directed radially outward is applied to the projecting portion 35. The second pad spring 6 includes a pair of second arm portions 39, and the second arm portion 39 abuts against the shoulder portion 37 from the rad ial outer side in a state where the second pad spring 6 is supported and fixed to the caliper 2. Accordingly, an elastic force directed radially inward is applied to the shoulder portion 37.

A support structure of the first pad spring 5 and the second pad spring 6 for the caliper 2 is not particularly limited, and various conventionally known pad spring support structures can be adopted. Further, in Fig. 4, in the first pad spring 5 and the second pad spring 6, only shapes of the tip end portions of the first arm portion 38 and the second arm portion 39 are illustrated and shapes of the other parts are omitted since the shapes of the other parts may be appropriately changed according to the support structure for the caliper 2.

In the first embodiment, support arm portions 41a, 41b of clips 40a, 40b made of metal plates having elasticity and corrosion resistance, such as stainless steel plates, are engaged with engagement concave portions 27a, 27b provided on the radial outer side surface of the center bridge 12. Flat plate-shaped held plate portions 42a, 42b constituting the clips 40a, 40b are interposed between the first torque transmitting surface 34 and the first torque receiving surface 26, respectively. This prevents an occurrence of plastic deformation, such as a recess, on the first torque receiving surface 26.

Although illustration is omitted, it is also possible to provide a pad clip made of a metal plate having elasticity and corrosion resistance, such as a stainless steel plate, between the side edge portion on one circumferential end side of the back plate 29 and the rotation-out side guide wall portion 19. It is possible to prevent a sliding portion between the back plate 29 and the rotation-out side guide wall portion 19 from rusting, and to reduce or prevent an occurrence of wear on the sliding portion by adopting such a configuration.

In the case of the first embodiment having the above configuration, a moment in the following direction is generated for the inner pad 3 and the outer pad 4. Hereinafter, this is described in detail with reference to Figs. 4 and 9.

At the time of forward braking, as illustrated in (A) of Fig. 9, the brake tangential force F1 directed to the one circumferential side acts on the point A which is the center of the friction surface of the lining 28. Accordingly, a pad 3 (4) moves slightly to the one circumferential side, and the first torque transmitting surface 34 provided on the one circumferential surface of the first torque transmitting portion 33 abuts against the first torque receiving surface 26 provided on the center bridge 12, so that the brake tangential force F1 is borne. Here, when a virtual circle passing through an abutting portion of the first torque transmitting surface 34 and the first torque receiving surface 26 and the rotation center O of the rotor 7 is drawn, most of the surface of the lining 28 is located inside the virtual circle. Therefore, at the time of forward braking, a moment M1 acts on the pad 3 (4) in a direction (clockwise direction) in which one circumferential side part is pushed up radially outward and the other circumferential side part is pushed down radially inward. Further, in this manner, the moment M1 acting on the pad 3 (4) is borne by the radial outer side surface of the ear portion 30 abutting against the rotation-out side moment supporting surface 21 provided on the radial outer side surface of the guide recessed groove 20 and the radial inner surface of the second torque transmitting portion 31 abutting against the rotation-in side moment supporting surface 25 provided on the radial outer side surface of the rotation-in side projecting portion 24. Therefore, at the time of forward braking, the pad 3 (4) is restrained from the caliper 2 at three points of the first torque receiving surface 26, the rotation-out side moment supporting surface 21, and the rotation-in side moment supporting surface 25.

On the other hand, at the time of reverse braking, as illustrated in (B) of Fig. 9, the brake tangential force F2 directed to the other circumferential side acts on the point A, which is the center of the friction surface, in the circumferential direction opposite to the brake tangential force F1 acting at a time of forward movement. Accordingly, the pad 3 (4) moves slightly to the other circumferential side, and in the side edge portions on the other circumferential end side of the back plate 29, the second torque transmitting surface 32 provided radially inward from an action line of the brake tangential force F2 abuts against the second torque receiving surface 23, so that the brake tangential force F2 is borne. Here, when a virtual circle passing through an abutting portion of the second torque transmitting surface 32 and the second torque receiving surface 23 and the rotation center O of the rotor 7 is drawn, most of the surface of the lining 28 is located outside the virtual circle. Therefore, at the time of reverse braking, a moment M2 acts on the pad 3 (4) in the direction (a clockwise direction which is the same direction as the moment M1) in which the one circumferential side part is pushed up radially outward and the other circumferential side part is pushed down radially inward. Further, in this manner, the moment M2 acting on the pad 3 (4) is borne by the radial outer side surface of the ear portion 30 abutting against the rotation-out side moment supporting surface 21 provided on the radial outer side surface of the guide recessed groove 20 and the radial inner surface of the second torque transmitting portion 31 abutting against the rotation-in side moment supporting surface 25 provided on the radial outer side surface of the rotation-in side projecting portion 24. Therefore, at the time of reverse braking, the pad 3 (4) is restrained from the caliper 2 at three points of the second torque receiving surface 23, the rotation-out side moment supporting surface 21, and the rotation-in side moment supporting surface 25.

As described above, in the case of the first embodiment, the directions of the moments M1, M2 acting on the inner pad 3 and the outer pad 4 can be the same at the time of forward braking and reverse braking. Therefore, the inner pad 3 and the outer pad 4 can be easily turned in the clockwise direction and the postures of the inner pad 3 and the outer pad 4 can be stabilized even when partial contact of the lining 28 with the rotor 7 occurs. In addition, for example, as in the case of garage parking in a parking lot, the postures of the inner pad 3 and the outer pad 4 can be maintained even when the forward braking and the reverse braking are repeated. As described above, in the first embodiment, the postures of the inner pad 3 and the outer pad 4 do not need to be changed, so that while generation of a brake squeal can be reduced or prevented, generation of a chronic noise can be reduced or prevented.

Further, in the first embodiment, in the inner pad 3 and the outer pad 4, while an elastic force directed radially outward is applied to the projecting portion 35 provided on the one circumferential side, an elastic force directed radially inward is applied to the shoulder portion 37 provided on the other circumferential side by the first pad spring 5 and the second pad spring 6. Therefore, it is possible to apply a moment to the inner pad 3 and the outer pad 4 in a direction in which the inner pad 3 and the outer pad 4 are to be turned in the clockwise direction even in a non-braking state. Therefore, the postures of the inner pad 3 and the outer pad 4 do not need to be changed between the braking (forward braking and reverse braking) and the non-braking, so that a contact state between the first torque transmitting surface 34 and the second torque transmitting surface 32 and the first torque receiving surface 26 and the second torque receiving surface 23 can be stabilized. In addition, it is possible to prevent the inner pad 3 and the outer pad 4 from rattling against the caliper 2 even when traveling on a rough road or the like.

### [Second Embodiment]

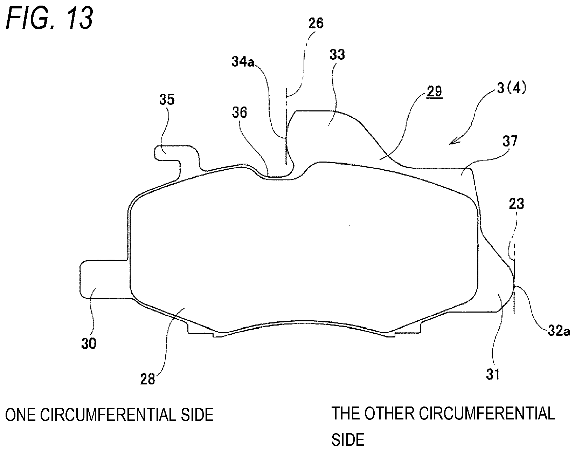

A second embodiment of the present invention is described with reference to Fig. 13. In the second embodiment, the first torque transmitting surface 34a is not a flat surface but a convex curved surface in which a radial intermediate portion projects toward the one circumferential side. The second torque transmitting surface 32a is not a flat surface but a convex curved surface in which a radial intermediate portion projects toward the other circumferential side.

In the second embodiment having such a configuration, an abutting position (a radial position) of the first torque transmitting surface 34a with respect to the first torque receiving surface 26 and an abutting position (a radial position) of the second torque transmitting surface 32a with respect to the second torque receiving surface 23 can be constant (stabilized). Further, a contact state of the first torque transmitting surface 34a and the first torque receiving surface 26 and a contact state of the second torque transmitting surface 32a and the second torque receiving surface 23 can be point contact instead of surface contact, so that it is possible to smoothly move the inner pad 3 and the outer pad 4 in the axial direction.

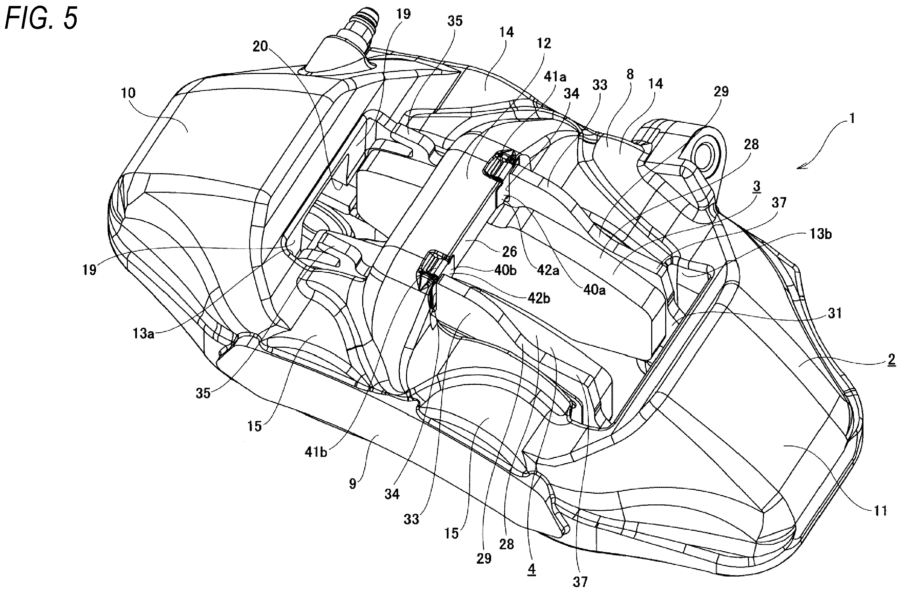

Although illustration is omitted, in order to prevent the first torque receiving surface 26 and the second torque receiving surface 23 from being recessed, it is also possible to interpose the clips 40a, 40b (see Fig. 5 or the like) as shown in the first embodiment between the first torque transmitting surface 34a and the first torque receiving surface 26 and between the second torque transmitting surface 32a and the second torque receiving surface 23.

Other configurations and operational effects in the second embodiment are the same as those in the first embodiment.

### [Third Embodiment]

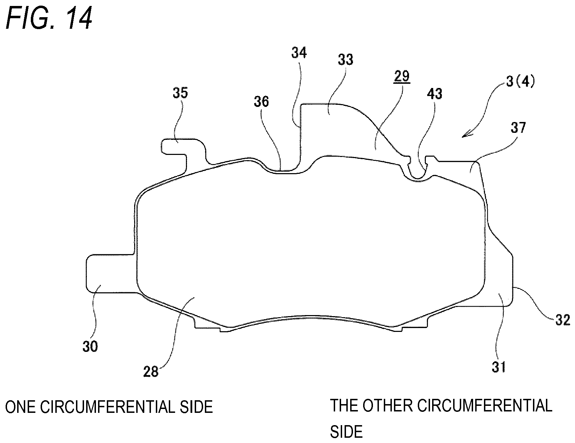

A third embodiment of the present invention is described with reference to Fig. 14. In the third embodiment, a concave portion 43 recessed radially inward is provided in a part (one circumferential end portion of the shoulder portion 37) which is located on the one circumferential side with respect to the first torque transmitting portion 33 and is near the other circumferential end portion of the outer peripheral edge of the back plate 29. The concave portion 43 is used to attach an electrical wear indicator that is configured to detect a wear amount of the lining 28 to detect a replacement timing of the inner pad 3 and the outer pad 4.

In the case of the third embodiment having such a configuration, a wear indicator can be attached at a part of the lining 28 on the rotation-in side and on the radial outer side where a wear amount increases, so that it is possible to effectively prevent the wear amount of the lining 28 from being excessively large.

Other configurations and operational effects in the third embodiment are the same as those in the first embodiment.

Here, characteristics of the embodiments of the disc brake pad and the disc brake device according to the present invention described above are briefly summarized and listed below, respectively.
[1] A disc brake pad (the inner pad 3, the outer pad 4) including:
   a lining (28); and
   a back plate (29) supporting a back surface of the lining (28),
   in which a first torque transmitting portion (33), which is configured to transmit a brake tangential force (F1) that acts toward one circumferential side at a time of braking, is provided at a part of the back plate (29) projecting radially outward from an outer peripheral edge of the lining (28), and
   in which a second torque transmitting portion (31), which is configured to transmit a brake tangential force (F2) that acts toward the other circumferential side at the time of braking, is provided at a part of the other circumferential end portion of the back plate (29) that is located radially inward from an action line (friction surface center A) of the brake tangential force acting at the time of braking.
[2] The disc brake pad (the inner pad 3, the outer pad 4) according to [1], in which one circumferential side surface (the first torque transmitting surface 34) of the first torque transmitting portion (33) is provided at a circumferential intermediate portion of the back plate (29).
[3] The disc brake pad (the inner pad 3, the outer pad 4) according to any one of [1] and [2],
   in which a guided portion (the ear portion 30), which is engaged with a caliper (2) movably in an axial direction and supports a moment acting at the time of braking, is provided at one circumferential end portion of the back plate (29).
[4] The disc brake pad (the inner pad 3, the outer pad 4) according to [3],
   in which the guided portion is a convex ear portion (30) projecting from a side edge portion on one circumferential end side of the back plate (29) to the one circumferential side.
[5] The disc brake pad (the inner pad 3, the outer pad 4) according to any one of [1] to [4],
   in which at least one of one circumferential side surface (the first torque transmitting surface 34a) of the first torque transmitting portion (33) and the other circumferential side surface (the second torque transmitting surface 32a) of the second torque transmitting portion (31) is a convex curved surface.
[6] The disc brake pad (the inner pad 3, the outer pad 4) according to any one of [1] to [5],
   in which a projecting portion (35) for pad spring engagement projecting radially outward is provided at a part of an outer peripheral edge portion of the back plate (29) on one circumferential side with respect to the first torque transmitting portion (33).
[7] The disc brake pad (the inner pad 3, the outer pad 4) according to any one of [1] to [6],
   in which a concave portion (43) for mounting a wear indicator, which is recessed radially inward, is formed at a part of the outer peripheral edge portion of the back plate (29) on the other circumferential side with respect to the first torque transmitting portion (33).
[8] A disc brake device (the opposed-piston disc brake device 1) including:
   a caliper (2) including a pair of bodies (inner body 8, outer body 9) disposed on both axial sides of a rotor (7) that rotates with a wheel; and
   a pair of pads (inner pad 3, outer pad 4) which are supported to the bodies (inner body 8, outer body 9) so as to be movable in an axial direction,
   in which each of the pads (the inner pad 3, the outer pad 4) is the disc brake pad (the inner pad 3, the outer pad 4) according to any one of [1] to [7], and
   in which a torque receiving portion (center bridge 12), which abuts against the first torque transmitting portion (33) and is configured to support a brake tangential force (F1) that acts toward one circumferential side on each of the pads (the inner pad 3, the outer pad 4) at a time of braking, is provided in a state of connecting the pair of bodies (the inner body 8, the outer body 9) in the axial direction.
[9] The disc brake device (the opposed-piston disc brake device) according to [8],
   in which the torque receiving portion (the center bridge 12) is formed of a member separate from the caliper (2).
[10] The disc brake device (the opposed-piston disc brake device 1) according to any one of [8] and [9], further including:
   a first pad spring (5) which is configured to apply an elastic force directed radially outward to a part of the pad (the inner pad 3, the outer pad 4) on the one circumferential side.
[11] The disc brake device (the opposed-piston disc brake device 1) according to any one of [8] to [10], further including:
   a second pad spring (6) which is configured to apply an elastic force directed radially inward to a part of the pad (the inner pad 3, the outer pad 4) on the other circumferential side.

The present invention is not limited to the embodiments described above, and can be appropriately modified, improved, or the like. In addition, a material, a shape, a size, a number, an arrangement position, or the like of each constituent element in the embodiment described above are optional as long as the present invention can be achieved, and the present invention is not limited thereto.

The present application is based on a Japanese Patent Application (Patent Application No. 2017-014005) filed on Jan 30, 2017, contents of which are incorporated herein by way of reference.

### INDUSTRIAL APPLICABILITY

As described in a section of the embodiments, the present invention is not limited to a structure in which the disc brake device is assembled in a direction in which the other circumferential side is the rotation-in side when a vehicle is advanced and the one circumferential side is the rotation-out side when the vehicle is advanced. That is, a structure, in which the disc brake device is assembled in a direction in which the other circumferential side is the rotation-out side when the vehicle is advanced and the one circumferential side is the rotation-in side when the vehicle is advanced, is also targeted. In addition, when the present invention is implemented, it is also possible to adopt a structure of the center bridge having the first torque receiving surface that is not provided integrally with the caliper, that is formed separately from the caliper, and that is fixed with respect to the caliper.

### REFERENCE SIGNS LIST

1 opposed-piston disc brake device (disc brake device)
2 caliper
3 inner pad (disc brake pad)
4 outer pad (disc brake pad)
5 first pad spring (pad spring)
6 second pad spring (pad spring)
7 rotor
8 inner body (body)
9 outer body (body)
10 connection portion
11 connection portion
12 center bridge (torque receiving portion)
13a, 13b window portion
14 inner cylinder
15 outer cylinder
16 inner piston
17 outer piston
18 mounting seat
19 rotation-out side guide wall portion
20 guide recessed groove
21 rotation-out side moment supporting surface
22 rotation-in side guide wall portion
23 second torque receiving surface
24 rotation-in side projecting portion
25 rotation-in side moment supporting surface
26 first torque receiving surface
27a, 27b engagement concave portion
28 lining
29 back plate
30 ear portion (guided portion)
31 second torque transmitting portion
32, 32a second torque transmitting surface (the other circumferential side surface of second torque transmitting portion)
33 first torque transmitting portion
34, 34a first torque transmitting surface (one circumferential side surface of first torque transmitting portion)
35 projecting portion
36 clearance concave portion
37 shoulder portion
38 first arm portion
39 second arm portion
40a, 40b clip
41a, 41b support arm portion
42a, 42b held plate portion
43 concave portion

## Claims

1. A disc brake pad comprising:
a lining; and
a back plate supporting a back surface of the lining,
wherein a first torque transmitting portion, which is configured to transmit a brake tangential force that acts toward one circumferential side at a time of braking, is provided at a part of the back plate projecting radially outward from an outer peripheral edge of the lining, and
wherein a second torque transmitting portion, which is configured to transmit a brake tangential force that acts toward the other circumferential side at the time of braking, is provided at a part of the other circumferential end portion of the back plate that is located radially inward from an action line of the brake tangential force acting at the time of braking.

2. The disc brake pad according to claim 1,
wherein one circumferential side surface of the first torque transmitting portion is provided at a circumferential intermediate portion of the back plate.

3. The disc brake pad according to any one of claims 1 and 2,
wherein a guided portion, which is engaged with a caliper movably in an axial direction and supports a moment acting at the time of braking, is provided at one circumferential end portion of the back plate.

4. The disc brake pad according to claim 3,
wherein the guided portion is a convex ear portion projecting from a side edge portion on one circumferential end side of the back plate to the one circumferential side.

5. The disc brake pad according to any one of claims 1 to 4,
wherein at least one of one circumferential side surface of the first torque transmitting portion and the other circumferential side surface of the second torque transmitting portion is a convex curved surface.

6. The disc brake pad according to any one of claims 1 to 5,
wherein a projecting portion for pad spring engagement projecting radially outward is provided at a part of an outer peripheral edge portion of the back plate on one circumferential side with respect to the first torque transmitting portion.

7. The disc brake pad according to any one of claims 1 to 6,
wherein a concave portion for mounting a wear indicator, which is recessed radially inward, is formed at a part of the outer peripheral edge portion of the back plate on the other circumferential side with respect to the first torque transmitting portion.

8. A disc brake device comprising:
a caliper including a pair of bodies disposed on both axial sides of a rotor that rotates with a wheel; and
a pair of pads which are respectively supported to the bodies so as to be movable in an axial direction,
wherein each of the pads is the disc brake pad according to any one of claims 1 to 7, and
wherein a torque receiving portion, which abuts against the first torque transmitting portion and is configured to support a brake tangential force that acts toward one circumferential side on each of the pads at a time of braking, is provided in a state of connecting the pair of bodies in the axial direction.

9. The disc brake device according to claim 8,
wherein the torque receiving portion is formed of a member separate from the caliper.

10. The disc brake device according to any one of claims 8 and 9, further comprising:
a first pad spring which is configured to apply an elastic force directed radially outward to a part of the pad on the one circumferential side.

11. The disc brake device according to any one of claims 8 to 10, further comprising:
a second pad spring which is configured to apply an elastic force directed radially inward to a part of the pad on the other circumferential side.
